# EUROPEAN PATENT APPLICATION

(11) **EP 2 942 854 A2**
(43) Date of publication of application: **11.11.2015**
(21) Application number: 15166795.3
(22) Date of filing: 07.05.2015
(51) Int. Cl.: H02J 7/02, H04B 5/00

(54) **ELECTRONIC DEVICE FOR HANDLING SHARING OF COMMUNICATION HARDWARE IN WIRELESS CHARGING SYSTEM**

(30) Priority: 07.05.2014 US 201461990072 P; 28.04.2015 US 201514698832
(71) Applicant: HTC Corporation, Taoyuan City 330 (TW)
(72) Inventor: Chu, Feng-Seng, 330, Taoyuan District, Taoyuan City (TW)
(74) Representative: Wagner, Karl H.

(57) **Abstract**

An electronic device of a wireless charging system for handling sharing of communication hardware includes a processing means and a storage unit. The processing means is utilized for executing a program. The storage unit is utilized for storing the program, which instructs the processing means to perform the following steps: receiving wireless power from a wireless charger by communicating with the wireless charger via a communication module of the electronic device; detecting a request of utilizing the communication module from an application; delivering a message to a user to indicate that the request is detected; receiving a response to the message from the user; and stopping receiving wireless power from the wireless charger and switching the communication module to be utilized for the application, or keeping on receiving wireless power from the wireless charger and rejecting the request from the application according to the response from the user.

## Description

### Background of the Invention

### 1. Field of the Invention

The present invention relates to a method and electronic device utilized in a wireless charging system, and more particularly, to a method and electronic device for handling sharing of communication hardware in a wireless charging system.

### 2. Description of the Prior Art

With the proliferation of portable electronic devices such as mobile devices, smart phones and tablet PCs, the demand for charging devices, especially for those provided in public areas, is increasing. In addition, people would like to get rid of annoying wires if possible. One technology which realizes this desire is wireless charging, in which portable electronic device(s) comprising a power receiver is placed on and charged through a wireless charger (e.g. a power base station comprising a power transmitter). Therefore, the current trend aims at providing wireless charging in public areas such as coffee shops, stores, train stations, airports, and restaurants, so that people may easily find a wireless power supply to charge their portable electronic devices.

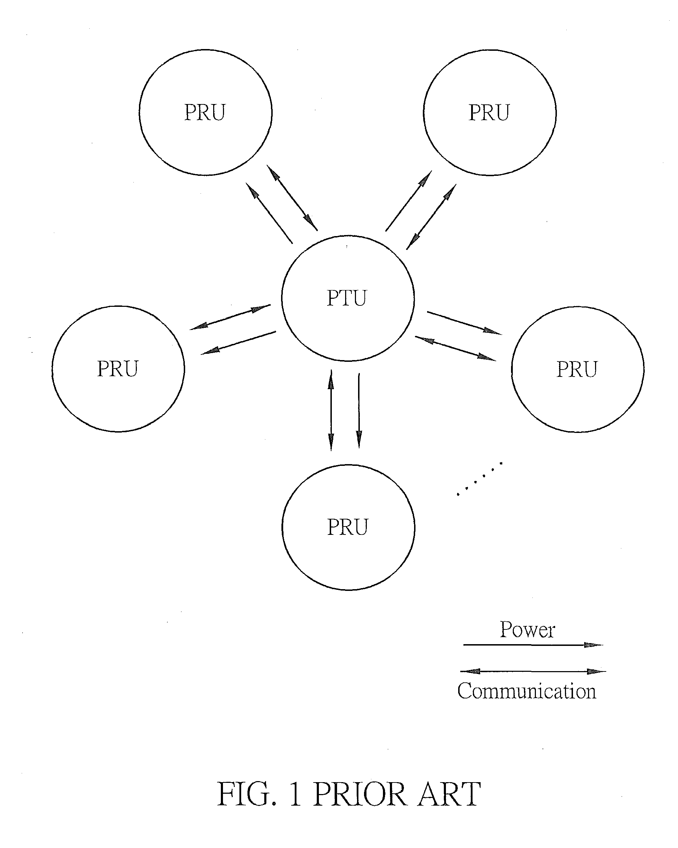

Alliance for wireless power (A4WP) is a leading organization in the world defining the resonant wireless power standard, in which the power can be delivered from a power transmitting unit (PTU) to a power receiving unit (PRU) within a distance without physically connection. In the current specification "Wireless Power Transfer System Baseline System Specification (BSS)," v1.2, January 2014, delivered by A4WP, one PTU can connect to 8 PRUs and there exists bi-directional communication links between each pair of PTU and PRU, as shown in FIG. 1.

This bi-directional communication is realized by Bluetooth Low Energy (BLE), and during the connection, the PTU plays as the master while the PRU plays as the slave. The PRU includes one communication module with RF circuits and an antenna. The communication module may be shared between the wireless power transfer operation and other possible applications. However, the existing protocols and specifications do not clearly define how the communication module is operated when the communication module is occupied by wireless power transfer operation and a request from another application arrives, or when the communication module is used by an application and a request from the wireless power transfer operation arrives.

### Summary of the Invention

It is therefore an objective of the present invention to provide a method for handling sharing of the communication module in an electronic device and the electronic device thereof, in order to solve the abovementioned problem.

The present invention discloses an electronic device of a wireless charging system for handling sharing of communication hardware. The electronic device comprises a processing means and a storage unit. The processing means is utilized for executing a program. The storage unit, coupled to the processing means, is utilized for storing the program which instructs the processing means to perform the following steps: receiving wireless power from a wireless charger by communicating with the wireless charger via a communication module of the electronic device; detecting a request of utilizing the communication module from an application; delivering a message to a user to indicate that the request is detected; receiving a response to the message from the user; and stopping receiving wireless power from the wireless charger and switching the communication module to be utilized for the application, or keeping on receiving wireless power from the wireless charger and rejecting the request from the application according to the response from the user.

The present invention further discloses an electronic device of a wireless charging system for handling sharing of communication hardware. The electronic device comprises a processing means and a storage unit. The processing means is utilized for executing a program. The storage unit, coupled to the processing means, is utilized for storing the program which instructs the processing means to perform the following steps: executing an application by utilizing a communication module of the electronic device; receiving a first message indicating a request of accessing to the communication module from a wireless charger; delivering a second message to a user to indicate that the first message is received from the wireless charger; receiving a response to the second message from the user; and stopping the application and starting a wireless power transfer from the wireless charger, or keeping on executing the application and ignoring the first message from the wireless charger according to the response from the user.

The present invention further discloses an electronic device of a wireless charging system for handling sharing of communication hardware. The electronic device comprises a processing means and a storage unit. The processing means is utilized for executing a program. The storage unit, coupled to the processing means, is utilized for storing the program which instructs the processing means to perform the following steps: accepting a wireless power transfer from a wireless charger by communicating with the wireless charger via a first communication module of the electronic device; executing an application by utilizing the first communication module; and scheduling a utilization of the first communication module for the wireless power transfer and the application.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a basic wireless charging system of A4WP.
FIG. 2 is a schematic diagram of a wireless charging system according to an example of the present invention.
FIG. 3 is a functional block diagram of a wireless charging system according to an example of the present invention.
FIG. 4 is a flowchart of a process according to an example of the present invention.
FIG. 5 is a flowchart of a process according to an example of the present invention.
FIG. 6 is a flowchart of a process according to an example of the present invention.

### Detailed Description

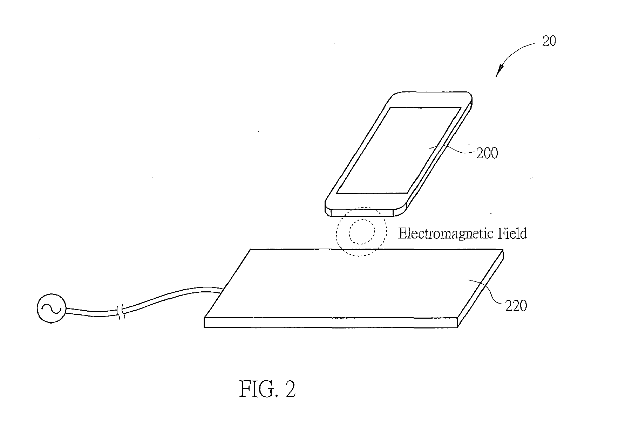

Please refer to FIG. 2, which is a schematic diagram of a wireless charging system 20 according to an example of the present invention. A wireless charging system may include at least one wireless charger and at least one electronic device that may be charged by the wireless charger. For simplicity, in FIG. 2, the wireless charging system 20 is briefly composed of an electronic device 200 and a wireless charger 220. The wireless charger 220 may represent a power base station (PBS), including a power transmitter or a power transmitting module with digital/analog chip(s), to supply wireless power to the electronic device 200. The wireless charger 220 may be a standalone charger, a charger embedded in a car, a table or the power transmitting unit (PTU) shown in FIG. 1. The electronic device 200 may be a car, a personal computer, or any portable electronic device such as a mobile phone, a laptop, a tablet computer, an electronic book, a portable computer system, a music player, at least a power receiver or a power receiving module, or a power receiving unit (PRU) shown in FIG. 1. The electronic device 200 may directly attach to the wireless charger 220 or keep within a distance from the wireless charger 220 for wireless charging. As shown in FIG. 2, the electronic device 200 receives wireless power from the wireless charger 220 by electromagnetic induction so that the battery of the electronic device 200 is charged without using any wire connections.

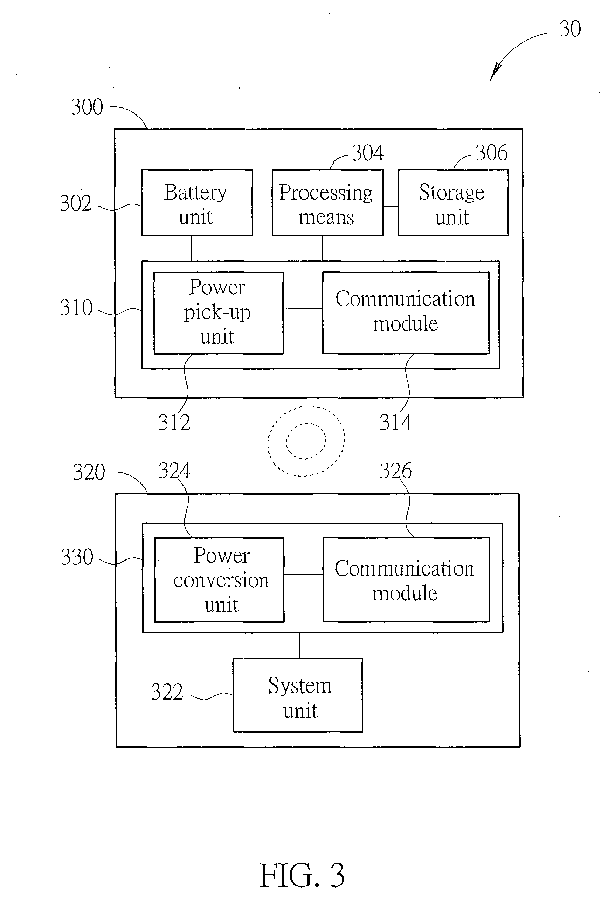

Please refer to FIG. 3, which is a functional block diagram of a wireless charging system 30 according to an example of the present invention. The wireless charging system 30 includes an electronic device 300 and a wireless charger 320. The electronic device 300 may be the electronic device 200 shown in FIG. 2, and the wireless charger 320 may be the wireless charger 220 shown in FIG. 2. The electronic device 300 and the wireless charger 320 may use a wireless charging standard developed by any wireless charging standard group, such as Wireless Power Consortium (WPC), Alliance for Wireless Power (A4WP), Power Matter Alliance (PMA), but is not limited herein.

The electronic device 300 may include a battery unit 302, a processing means 304, a storage unit 306 and a power receiver 310. The power receiver 310 may include a power pick-up unit 312 used for receiving wireless power to charge the battery unit 302 and a communication module 314 used for communicating, i.e., sending/receiving data, signals, messages and/or packets, with the wireless charger 320 via power signals or other communication media and controlling the operations of the power pick-up unit 312. The processing means 304, which may be a microprocessor or Application Specific Integrated Circuit (ASIC), is utilized for executing a program. The storage unit 306, coupled to the processing means 304, is utilized for storing the program which instructs the processing means to perform operations of sharing communication hardware, e.g., sharing the communication module 314. Examples of the storage unit 306 include but are not limited to a subscriber identity module (SIM), read-only memory (ROM), flash memory, random-access memory (RAM), CD-ROM/DVD-ROM, magnetic tape, hard disk and optical data storage device.

The wireless charger 320 includes a power transmitter 330 and a system unit 322. The power transmitter 330 may include a power conversion unit 324 used for supplying wireless power and a communication module 326 used for communicating, i.e., sending/receiving signals or packets, with the electronic device 300 and controlling the operations of the power conversion unit 324. The system unit 322 may include a processing means such as a microcontroller, microprocessor or an Application Specific Integrated Circuit (ASIC), for handling wireless charging functions activated by a processing result of the power transmitter 330. In the example of FIG. 3, the wireless charging device 320 contains one power transmitter 330. In other examples, the wireless charging device may contain multiple power transmitters for supplying wireless power to multiple electronic devices.

Since the electronic device 300 may be any portable electronic device capable of wireless communication functions, such as a mobile phone, the communication module 314 may not only be responsible for controlling wireless charging operations, but also for wireless communication operations. For example, if the electronic device 300 is a mobile phone and the communication module 314 is a Bluetooth Low Energy (BLE) module, the communication module 314 may be utilized for connecting with a BLE earphone when a user of the mobile phone is listening music or talking with the BLE earphone. In general, the electronic device 300 may include only one communication module 314, so the communication module 314 may be shared between the wireless power transfer operations and other applications such as the BLE earphone, and thereby switched between these applications. Note that the communication module 314 may be or may not be shared between the wireless power transfer operations and the other applications simultaneously according to the protocols or standards defined for the communication module 314. For example, if the communication module 314 is a BLE module, several older BLE versions do not allow simultaneous sharing of the BLE module between different applications, while the latest version may allow. Further, sharing of the communication module 314 may also depend on the role played by the electronic device 300 in the connections. For example, the electronic device 300, e.g., a mobile phone, plays as the slave when receiving power from a wireless charger, while plays as the master when connecting with a BLE earphone. In general, in the connections dealt with by the BLE module with older versions, the electronic device 300 may not be simultaneously configured to be the master and slave for different applications.

If simultaneous sharing of the communication device 314 is not allowed, the electronic device 300 needs to make an indication to the user when the communication module 314 is occupied by a wireless power transfer operation and a request from another application arrives, or when the communication module is used by an application and a request from the wireless power transfer operation arrives.

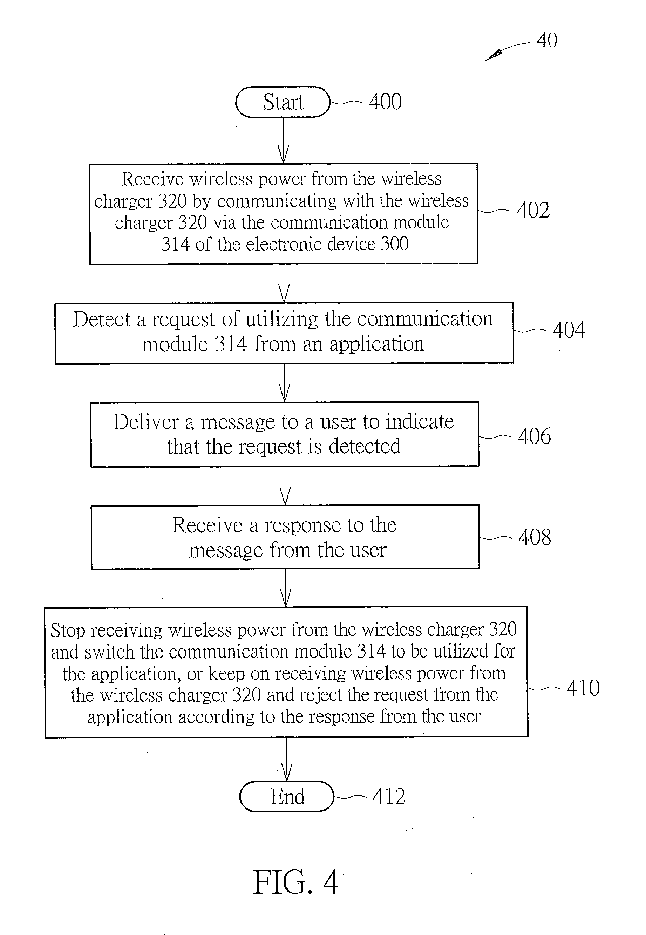

Please refer to FIG. 4, which is a flowchart of a process 40 according to an example of the present invention. The process 40 may be utilized for an electronic device of a wireless charging system, such as the electronic device 200 shown in FIG. 2 or the electronic device 300 shown in FIG. 3, for handling sharing of communication hardware, e.g., sharing of the communication module 314. The process 40 may be implemented in the electronic device 300 and includes the following steps:
- Step 400:: Start.
- Step 402:: Receive wireless power from the wireless charger 320 by communicating with the wireless charger 320 via the communication module 314 of the electronic device 300.
- Step 404:: Detect a request of utilizing the communication module 314 from an application.
- Step 406:: Deliver a message to a user to indicate that the request is detected.
- Step 408:: Receive a response to the message from the user.
- Step 410:: Stop receiving wireless power from the wireless charger 320 and switch the communication module 314 to be utilized for the application, or keep on receiving wireless power from the wireless charger 320 and reject the request from the application according to the response from the user.
- Step 412:: End.

According to the process 40, the communication module 314 may not only be utilized for realizing communications between the electronic device 300 and the wireless charger 320, but also be utilized for an application such as a connection with BLE earphone. The electronic device 300 may detect a request of utilizing the communication module 314 from the application when receiving wireless power from the wireless charger 320 by communicating with the wireless charger 320 via the communication module 314. In this case, both of the wireless power transfer operation and the application need to use the communication module 314, but the communication module 314 may not be shared by the wireless power transfer operation and the application simultaneously. Therefore, the electronic device 300 may deliver a message to the user to indicate that the request is detected and ask the user to make selection between the wireless power transfer and the application. The user may respond with a selection. The electronic device 300 then stops receiving wireless power from the wireless charger 320 and switches the communication module 314 to be utilized for the application, or keeps on receiving wireless power from the wireless charger 320 and rejects the request from the application according to the response from the user. More specifically, if the response from the user indicates that the user needs to perform the application, the electronic device 300 may stop receiving wireless power from the wireless charger 320 and switch the communication module 314 to be utilized for the application; if the response from the user indicates that the user needs to go on the wireless power transfer, the electronic device 300 may keep on receiving wireless power from the wireless charger 320 and reject the request from the application.

The communication module 314 may be a near field communication (NFC) module, a BLE module, a Wi-Fi direct module, a device to device (D2D) communication module or any other module or device capable of communication functionalities using any communication technologies. In another example, the electronic device 300 may include a communication unit dedicated to wireless power transfer and another communication unit utilized for another application such as the connection with BLE earphone. The electronic device 300 may include only one antenna, which should also be shared between the wireless power transfer operation and the application. In such a condition, the antenna may be regarded as the shared communication module 314.

In addition to the BLE earphone connection, the application may also include the peer-to-peer file transfer between the electronic device 300 and another electronic device, a connection with a personal printer, or any other possible applications which require a usage of the communication module 314 of the electronic device 300.

In an example, the communication module 314 may be configured to switch between the wireless power transfer operation and the application automatically without asking for indication from the user. In other words, when the communication module 314 is used for receiving wireless power from the wireless charger 320, the electronic device 300 may stop receiving wireless power from the wireless charger 320 and switch the communication module 314 to be utilized for the application without delivering any message to the user. This implementation applies to the condition where the application is more important or has a higher priority.

Please note that the electronic device 300 may detect the request of utilizing the communication module 314 from the application by receiving a message including the request from the application. The electronic device 300 then delivers a message to the user to indicate that the request is detected. The message may be delivered to the user by various ways. For example, the electronic device 300 may display a text on its screen, or just make a sound or vibration to notify the user. The text displayed on the screen may include information notifying the user that the communication module 314 is occupied by the wireless power transfer and that the application is trying to access to the communication module 314. The text may also notify the user that the communication module 314 is now used for a communication with a wireless charger, and this communication should be interrupted if the user needs to enable the application, e.g., turn on the BLE earphone. The electronic device 300 may allow the user to make selection by asking the user whether to stop the wireless power transfer and switch the communication module 314 to be utilized for the application, or to keep on the wireless power transfer and reject the application. If the user selects to go on the wireless power transfer, the electronic device 300 may keep on receiving wireless power from the wireless charger 320 and reject the application. If the user selects to perform the application, the electronic device 300 may stop the wireless power transfer and switch the communication module 314.

Note that after the application finishes and stops using the communication module 314, the electronic device 300 may resume the wireless power transfer operation with the wireless charger 320. That is, the communication module 314 may reestablish a connection with the wireless charger 320. Taking BLE as an example, the communication module 314 may transmit a BLE advertisement to the wireless charger 320 if the communication module 314 is a BLE module. In response to reception of the BLE advertisement, the wireless charger 320 may transmit a connection request to the electronic device 300. After receiving the connection request, the communication module 314 may respond with a connection response to the wireless charger 320, in order to establish the wireless power transfer connection. Wireless power transfer may thereby start via the connection.

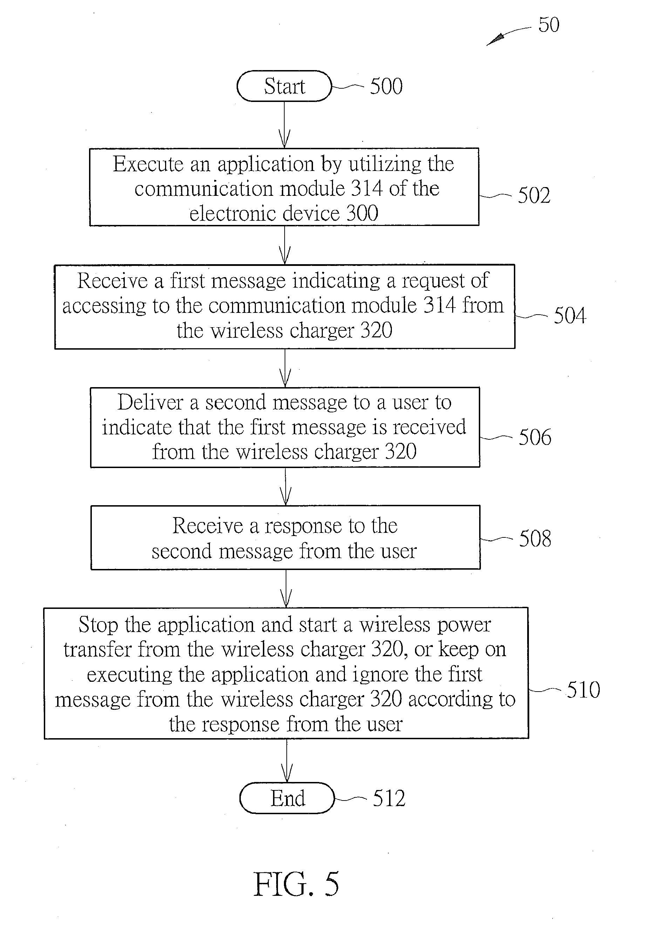

Please refer to FIG. 5, which is a flowchart of a process 50 according to an example of the present invention. The process 50 may be utilized for an electronic device of a wireless charging system, such as the electronic device 200 shown in FIG. 2 or the electronic device 300 shown in FIG. 3, for handling sharing of communication hardware, e.g., sharing of the communication module 314. The process 50 may be implemented in the electronic device 300 and includes the following steps:
- Step 500:: Start.
- Step 502:: Execute an application by utilizing the communication module 314 of the electronic device 300.
- Step 504:: Receive a first message indicating a request of accessing to the communication module 314 from the wireless charger 320.
- Step 506:: Deliver a second message to a user to indicate that the first message is received from the wireless charger 320.
- Step 508:: Receive a response to the second message from the user.
- Step 510:: Stop the application and start a wireless power transfer from the wireless charger 320, or keep on executing the application and ignore the first message from the wireless charger 320 according to the response from the user.
- Step 512:: End.

According to the process 50, the electronic device 300 may receive a first message indicating a request of accessing to the communication module 314 from the wireless charger 320 when executing an application by utilizing the communication module 314. In this case, both of the wireless power transfer operation and the application need to use the communication module 314, but the communication module 314 may not be shared by the wireless power transfer operation and the application simultaneously. Therefore, the electronic device 300 may deliver a second message to the user to indicate that the request is detected and ask the user to make selection between the wireless power transfer and the application. The user may respond with a selection. The electronic device 300 then stops the application and starts a wireless power transfer from the wireless charger 320, or keeps on executing the application and ignores the first message from the wireless charger 320 according to the response from the user. More specifically, if the response from the user indicates that the user needs to perform the wireless power transfer operation, the electronic device 300 may stop the application and start the wireless power transfer from the wireless charger 320; if the response from the user indicates that the user needs to go on the application, the electronic device 300 may keep on executing the application and ignore the first message from the wireless charger 320.

In an example, the communication module 314 may be configured to switch between the wireless power transfer operation and the application automatically without asking for indication from the user. In other words, when the communication module 314 is used for the application, the electronic device 300 may stop the application and start the wireless power transfer without delivering any message to the user. This implementation applies to the condition where the application is not important or has a lower priority, or the condition where the battery unit 302 of the electronic device 300 almost wears out and therefore has an urgent need for power reception.

Please note that the first message transmitted by the wireless charger 320 may include at least one of a broadcast message informing the electronic device 300 of existence of the wireless charger 320, a broadcast beacon used for detecting the electronic device 300 by the wireless charger 320, and a broadcast beacon used for charging the electronic device 300 by the wireless charger 320. For example, the wireless charger 320 may periodically transmit beacons to indicate that there is a wireless charger. Any electronic device approaching the wireless charger 320 may receive the beacons, and thereby know that the wireless charger 320 is in the vicinity and ready to supply wireless power. These beacons are used for detecting the electronic device, such as short beacons in A4WP specification. When an electronic device is detected by the wireless charger 320, other beacons are transmitted to charge the electronic device, in order to enable the communication module of the electronic device. These beacons may be long beacons in A4WP specification. In several examples, the short beacons may also be utilized for charging the electronic device, and are not limited herein.

Please note that the second message delivered to the user to indicate that the first message is received from the wireless charger 320 may be realized by various ways. For example, the electronic device 300 may display a text on its screen, or just make a sound or vibration to notify the user. The text displayed on the screen may include information notifying the user that the communication module 314 is occupied by the application and that the wireless charger 320 is detected, e.g., via the beacons. The text may also notify the user that the communication module 314 is now used for the application, and this application should be interrupted if the user needs to enable the wireless power transfer operation. The electronic device 300 may allow the user to make selection by asking the user whether to stop the application and start the wireless power transfer, or to keep on the application and not start the wireless power transfer. If the user selects to go on the application, the electronic device 300 may keep on the application and may not start the wireless power transfer. If the user selects to perform the wireless power transfer, the electronic device 300 may stop the application and start the wireless power transfer.

As mentioned above, if simultaneous sharing of the communication device 314 is not allowed, the electronic device 300 needs to make an indication to the user when the communication module 314 is occupied by a wireless power transfer operation and a request from another application arrives, or when the communication module is used by an application and a request from the wireless power transfer operation arrives. On the other hand, if simultaneous sharing of the communication device 314 is allowed, the electronic device 300 should perform a proper scheduling on the communication device 314 between different applications.

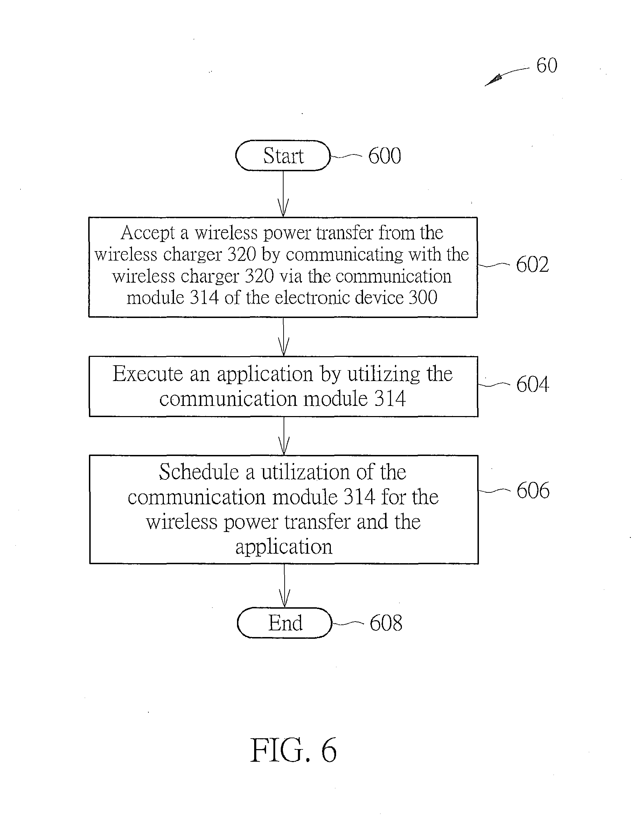

Please refer to FIG. 6, which is a flowchart of a process 60 according to an example of the present invention. The process 60 may be utilized for an electronic device of a wireless charging system, such as the electronic device 200 shown in FIG. 2 or the electronic device 300 shown in FIG. 3, for handling sharing of communication hardware, e. g. , sharing of the communication module 314. The process 60 may be implemented in the electronic device 300 and includes the following steps:
- Step 600:: Start.
- Step 602:: Accept a wireless power transfer from the wireless charger 320 by communicating with the wireless charger 320 via the communication module 314 of the electronic device 300.
- Step 604:: Execute an application by utilizing the communication module 314.
- Step 606:: Schedule a utilization of the communication module 314 for the wireless power transfer and the application.
- Step 608:: End.

According to the process 60, the electronic device 300 may accept a wireless power transfer from the wireless charger 320 by communicating with the wireless charger 320 via the communication module 314 when executing an application by utilizing the communication module 314 at the same time. The electronic device 300 then schedules the utilization of the communication module 314 for the wireless power transfer and the application.

In an example, the electronic device 300 is scheduled to use the communication module 314 for the application only when the communication module 314 is not used for the wireless power transfer. In other words, the communication module 314 is configured to apply time division multiple access (TDMA) when shared between different applications such as the wireless power transfer operation and other applications, which include the connection with a Bluetooth earphone, peer-to-peer file transfer and connection with a personal printer.

In another example, the electronic device 300 is scheduled to execute the application on a first radio resource of the communication module 314, wherein the first radio resource is different from a second radio resource utilized by the communication module 314 for the wireless power transfer. In other words, the electronic device 300 is configured to use different radio resources for the wireless power transfer and the application. More specifically, the electronic device 300 may apply frequency division multiple access (FDMA) to allocate different frequency bands to the wireless power transfer and the application. Alternatively, the electronic device 300 may apply code division multiple access (CDMA) to incorporate different codes in signal transmissions of the wireless power transfer and the application. In order to differentiate different applications, the electronic device 300 may use any possible resource allocation methods supported by the standards or protocols used for the communication module 314. For example, a Bluetooth module is capable of both FDMA and CDMA functionalities, while a BLE module does not support CDMA but is capable of FDMA functionality.

In several examples, the electronic device 300 may include more than one communication module, and different communication modules may be utilized for different applications. For example, a first communication module of the electronic device 300 may be configured to be utilized for the wireless power transfer operation, and a second communication module of the electronic device 300 may be configured to be utilized for an application such as a BLE earphone connection. In such a condition, the electronic device 300 may schedule the utilization of the first communication module for the wireless power transfer and the second communication module for the application, in order to avoid interferences between the wireless power transfer and the application.

More specifically, the electronic device 300 may avoid using the second communication module for the application at the same time when the first communication module is used for the wireless power transfer, e.g., the operations of TDMA, as in the case where one communication module is scheduled for different applications. Alternatively, FDMA or CDMA may also be applied; that is, the electronic device 300 may execute the wireless power transfer on a first radio resource of the first communication module, wherein the first radio resource is different from a second radio resource used by the second communication module for the application. Note that even if the wireless power transfer and the application are implemented by different communication modules, the operations of these communication modules are preferably separated to avoid interferences.

Those skilled in the art should readily make combinations, modifications and/or alterations on the abovementioned description and examples. The abovementioned steps of the processes including suggested steps may be realized by means that could be a hardware, a firmware known as a combination of a hardware device and computer instructions and data that reside as read-only software on the hardware device, or an electronic system. Examples of hardware may include analog, digital and mixed circuits known as microcircuit, microchip, or silicon chip. Examples of the electronic system may include a system on chip (SOC), system in package (SiP), a computer on module (COM), and the wireless charging systems 20 and 30.

To sum up, the present invention provides a method and electronic device for handling sharing of communication hardware in a wireless charging system. A communication module in an electronic device of the wireless charging system may be shared between wireless power transfer operations and other applications. When the communication module is occupied by a wireless power transfer operation and a request from another application arrives, or when the communication module is used by an application and a request from the wireless power transfer operation arrives, the electronic device may deliver an indication to a user to allow the user to make selection if simultaneous sharing of the communication device is not allowed. On the other hand, the electronic device may schedule the operations of the communication device between the wireless power transfer and other applications if simultaneous sharing of the communication device is allowed.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. An electronic device of a wireless charging system for handling sharing of communication hardware, the electronic device comprising:
a processing means, for executing a program; and
a storage unit, coupled to the processing means, for storing the program which instructs the processing means to perform the following steps:
receiving wireless power from a wireless charger by communicating with the wireless charger via a communication module of the electronic device;
detecting a request of utilizing the communication module from an application;
delivering a message to a user to indicate that the request is detected;
receiving a response to the message from the user; and
stopping receiving wireless power from the wireless charger and switching the communication module to be utilized for the application, or keeping on receiving wireless power from the wireless charger and rejecting the request from the application according to the response from the user.

2. The electronic device of claim 1, wherein the communication module is a near field communication (NFC) module, a Bluetooth Low Energy (BLE) module, a Wi-Fi direct module, a device to device (D2D) communication module or an antenna of the electronic device.

3. The electronic device of claim 1, wherein the application comprises at least one of a connection with a Bluetooth earphone, a peer-to-peer file transfer and a connection with a personal printer.

4. The electronic device of claim 1, wherein the step of delivering the message to the user to indicate that the request is detected comprises:
notifying the user that the communication module is occupied by a wireless power transfer;
notifying the user that the application is trying to access the communication module; and
asking the user whether to stop the wireless power transfer and switch the communication module to be utilized for the application, or to keep on the wireless power transfer and reject the application.

5. The electronic device of claim 1, wherein the program further instructs the processing means to perform the following step:
resuming the wireless power transfer after the application stops utilizing the communication module;
wherein the step of resuming the wireless power transfer comprises:
transmitting a BLE advertisement to the wireless charger when the communication module is a BLE module;
receiving a connection request from the wireless charger in response to the BLE advertisement; and
transmitting a connection response to the wireless charger in response to the connection request.

6. An electronic device of a wireless charging system for handling sharing of communication hardware, the electronic device comprising:
a processing means, for executing a program; and
a storage unit, coupled to the processing means, for storing the program which instructs the processing means to perform the following steps:
executing an application by utilizing a communication module of the electronic device;
receiving a first message indicating a request of accessing to the communication module from a wireless charger;
delivering a second message to a user to indicate that the first message is received from the wireless charger;
receiving a response to the second message from the user; and
stopping the application and starting a wireless power transfer from the wireless charger, or keeping on executing the application and ignoring the first message from the wireless charger according to the response from the user.

7. The electronic device of claim 6, wherein the communication module is a near field communication (NFC) module, a Bluetooth Low Energy (BLE) module, a Wi-Fi direct module, a device to device (D2D) communication module or an antenna of the electronic device.

8. The electronic device of claim 6, wherein the application comprises at least one of a connection with a Bluetooth earphone, a peer-to-peer file transfer and a connection with a personal printer.

9. The electronic device of claim 6, wherein the first message comprises at least one of a broadcast message informing the electronic device of existence of the wireless charger, a broadcast beacon used for detecting the electronic device by the wireless charger, and a broadcast beacon used for charging the electronic device by the wireless charger.

10. The electronic device of claim 6, wherein the step of delivering the second message to the user to indicate that the first message is received from the wireless charger comprises:
notifying the user that the wireless charger is detected; and
asking the user whether to stop the application and start the wireless power transfer, or to keep on the application and not start the wireless power transfer.

11. An electronic device of a wireless charging system for handling sharing of communication hardware, the electronic device comprising:
a processing means, for executing a program; and
a storage unit, coupled to the processing means, for storing the program which instructs the processing means to perform the following steps:
accepting a wireless power transfer from a wireless charger by communicating with the wireless charger via a first communication module of the electronic device;
executing an application by utilizing the first communication module; and
scheduling a utilization of the first communication module for the wireless power transfer and the application.

12. The electronic device of claim 11, wherein the step of scheduling the utilization of the first communication module for the wireless power transfer and the application comprises:
scheduling to use the first communication module for the application only when the first communication module is not used for the wireless power transfer.

13. The electronic device of claim 11, wherein the step of scheduling the utilization of the first communication module for the wireless power transfer and the application comprises:
executing the application on a first radio resource of the first communication module, wherein the first radio resource is different from a second radio resource utilized by the first communication module for the wireless power transfer.

14. The electronic device of claim 11, wherein the program further instructs the processing means to perform the following steps:
applying a second communication module of the electronic device to execute the application instead of the first communication module; and
scheduling a utilization of the first communication module for the wireless power transfer and a utilization of the second communication module for the application.

15. The electronic device of claim 14, wherein the step of scheduling the utilization of the first communication module for the wireless power transfer and the utilization of the second communication module for the application comprises:
avoiding using the second communication module for the application at the same time when the first communication module is used for the wireless power transfer.
